# EUROPEAN PATENT SPECIFICATION

(11) **EP 2 101 248 B1**
(45) Date of publication and mention of the grant of the patent: **21.06.2017**
(21) Application number: 09002827.5
(22) Date of filing: 27.02.2009
(51) Int. Cl.: G06F 3/03, G06F 1/16

(54) **Electronic device with unit for sending and receiving light**
Elektronische Vorrichtung mit Einheit zum Senden und Aufnehmen von Licht
Dispositif électronique avec une unité pour envoyer et recevoir de la lumière

(30) Priority: 29.02.2008 TW 97203535 U
(43) Date of publication of application: 16.09.2009
(73) Proprietor: Giga-Byte Technology Co., Ltd., New Taipei City 231 (TW)
(72) Inventor: Chen, Yu Wei, Hsin-Tien (TW); Chen, Chung Hung, Hsin-Tien (TW)
(74) Representative: Cabinet Plasseraud

(56) References cited:
- WO-A2-2005/122401
- US-A1- 2006 267 940

## Description

### BACKGROUND OF THE INVENTION

### Field of the Invention

The invention relates to a control method, and more particularly to a control method executing a specific program.

### Description of the Related Art

With the popularity of Windows operation system, abandoning the previous operation mode which uses the keyboard for inputting, so most software interfaces follow the trend and change to the graphical mode, to allow users to simply use a mouse cursor to execute and operate the software functions.

At present, window-based system is used on major part of mobile electronic devices, so the way to operate the mobile electronic device is to connect a traditional or a simple keyboard as an input device; and furthermore, in order to facilitate the user's operation, generally setting at least a connection interface to link with an external mouse, or directly having a touch pad which is installed in the mobile electronic device. Touch plate is an input apparatus, which operates the mouse cursor movement by slides of fingers on a smooth flat-panel, thus allow users to replace the previous way which needs to connect an additional external optical mouse with the way of operating the simple touch plate.

For mobile electronic device, it is inconvenient to carry if an external optical mouse needs to separately link with. Therefore, that is, it will lose its design intention of a mobile electronic device. But, embedding a touch pad for the operation of a mobile electronic device will reduce the space of other control keys, or enlarge the size of the mobile electronic device.

US 2006/267940 A1 discloses an integration of navigation device functionality into a handheld device. Fig. 8A-Fig. 8C of US 2006/267940 A1 illustrates a handheld device includes a body; an image capture system installed on the body to determine a movement direction and a movement value of the body of the handheld device; a display screen for displaying information, a touch pad for being touched and moved thereon for detecting a movement value via change of capacitance; and buttons to be pressed to achieve keypad function.

### SUMMARY OF THE INVENTION

The present invention is an electronic device which does not need to connect with an external optical mouse nor set a touchpad in the mobile electronic device which decreases the space of other control keys.

To achieve the above-mentioned object, according to the present invention of the electronic device includes a body; a display screen, installed in the body, for displaying information; an optical transceiver, attached to the body, continuously emits optical signals onto an object moving on the optical transceiver and continuously receives the reflection of emitted optical signals so as to determine a movement direction and a movement value to determine the movement direction and the movement value of a cursor displayed on the display screen; a first sensor, attached to the body, when it is touched and moved by hands, then a vertical movement value is measured via the change of capacitance value; and at least a second sensor, attached to the body, when a second sensor is touched, it generates a signal which is capable of enabling a corresponding function of said second sensor itself.

The electronic device is characterized in that the display screen is provided with touch-controlling function, the first sensor achieves a function of mouse scrolling according to the vertical movement value detected, and the display screen, the first sensor, the second sensor, and the optical transceiver are located on the same side surface of said body.

According to the present invention of the electronic device, the optical transceiver consists of an optical emitting unit and an optical receiving unit. The optical emitting unit will emit an optical signal; the optical receiving unit will receive reflection of the optical signal emitted.

According to the present invention of electronic device, an optical transceiver and a first sensor, set in the electronic device, will replace the previous design wherein needs to connect with an external optical mouse, and also replace the design wherein a touch plate needs to be attached. An optical transceiver controls the movement direction and movement value of the screen cursor by detecting the movement direction and movement value of fingers. A first sensor can detect the value of a finger vertical movement on the first sensor itself, what replaces the work of mouse scrolling. Therefore, with the apparatus, the electronic device is provided with a mouse function and the save more space for other apparatuses.

Further scope of applicability of the present invention will become apparent from the detailed description and accompanying drawing given hereinafter.

### BRIEF DESCRIPTION OF THE DRAWINGS

The present invention will become more fully understood from the detailed description given hereinbleow and the accompanying drawings which are given by way of illustration only, and thus are not limitative of the present invention, and wherein:
FIG. 1 is a plan schematic view of a mobile electronic device view in accordance with a first embodiment of the present invention;
FIG 2 is a plan schematic view of a mobile electronic device view in accordance with the second embodiment of the present invention;
FIG 3 is a flowchart of operation method of an optical transceiver in accordance with the present invention;
FIG 4 is a flow chart of operation method of a first sensor in accordance with the present invention.

### DETAILED DESCRIPTION OF THE INVENTION

The present invention will now be described in detail with reference to the accompanying drawings, wherein the same reference numerals will be used to identify the same or similar elements throughout the several views. It should be noted that the drawings should be viewed in the direction of orientation of the reference numerals.

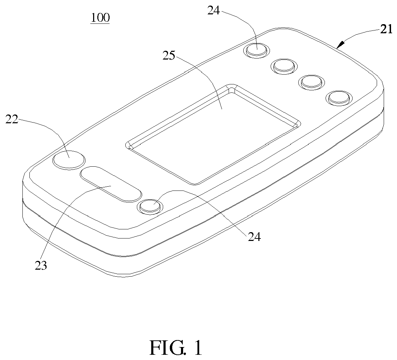

Referring to FIG. 1, a plan schematic view of a mobile electronic device with accordance to a first embodiment of the present invention includes a mobile electronic device 100, a body 21, an optical transceiver 22, a first sensor 23, and at least a second sensor 24.

The electronic device 100, can be a mobile telecommunication device, a portable computer, or other electronic devices, have feature of lightweight and easy to carry, but wherein is not limitative. In the electronic device 100, hard discs, memory, display processor, even more electronic elements are built in to achieve the functions of storing memory, computing, and so on, but wherein is not limitative.

A display screen 25 is installed in the body of the electronic device 100, for displaying information of windows interface, icon software, photographs, and films, characters etc. The display screen can be a Thin Film Transistor-Liquid Crystal Display, TFT-LCD or an Organic Electro Luminescent Display, OELD etc.. The display interface 25 is further provided with touch-controlling function.

An optical transceiver 22 is installed on the body 21. The optical transceiver 22 continuously emits optical signals. When a user uses a finger or a substitute, such as a stylus, to operate the optical transceiver 22, the emitted optical signals will be reflected by a shelter from hand. At the same time, the optical transceiver continuously receives reflected optical signals, and identifies the movement direction and movement value of the finger to determine the movement direction and value of mouse cursor on the display screen 25. The optical transceiver 22 comprises an optical emitting unit and an optical receiving unit. The optical emitting unit can generate and emit optical signals. The optical receiving unit can receive reflected optical signals. The optical emitting unit can be a light-emitting diode, but not limitative, to emit visible light or invisible light. Also, it can be a laser diode, emits laser light. The optical receiving unit is a photodiode, but not limitative, to receive visible light and invisible light etc..

A first sensor 23, which is installed on the body 21, is composed of several sensors (not shown). When a user touches and moves the first sensor 23 with a finger, the electric charge of hand results in a change in capacitance value or in resistance value, to detect the vertical movement value made by the user's finger on the first sensor 23. It replaces the design of mouse scrolling on the edge of windows interface. The first sensor is a bar shape.

A second sensor 24 is installed on the body 21. After the second sensor 24 is touched with a finger by the user, it will generate a signal. The signal enables an according function to the second senor 24. The second sensor 24 enables the functions of network connecting, photo-taking, touch keyboard turn-on, turn-on and turn-off, and etc.. The second sensor 24 can be a circle, a rectangle, a triangle, or a geometrical shape.

The first sensor 23 can be an optional apparatus. The optical transceiver 22 can cover the function of the first sensor 23. When the user use a finger or a substitute (such as a stylus) to have continual vertical movement on the optical transceiver 22, the optical transceiver 22 continuously will receive reflected optical signal directing to the same direction, to identify the direction of finger continual movement, to achieve the function of mouse scrolling, for rolling the scrolling bar on the edge of windows interface. Or, utilizing the touch function of the display screen 25 can directly control scrolling the scrolling bar on the edge of windows interface.

The second sensor 24 can be an optional apparatus. Utilizing the touch function of the display screen 25 can directly control function switching on windows interface. (For instance, enable function on network connecting, photo-tacking, touch keyboard turn-on, turn-on and turn-off, and etc..)

In the past, to control mouse cursor on the display screen 25, the electronic device 100 needed to connect with an external mouse or needed to be built a touch pad. In the present invention of the electronic device 100, the optical transceiver 22 is built to replace detecting movement of an optical mouse. At the same time, the first sensor 23 replaces mouse scrolling function. The present invention of the electronic device 100 is capable of a mouse function without an external mouse, and can avoid compressing the space for other apparatuses from the touch pad is built at the same time.

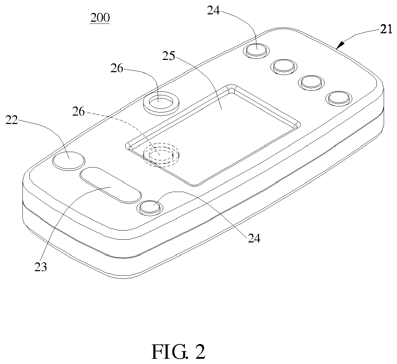

Referring to FIG. 2, FIG. 2 is a plan schematic view of an electronic device with accordance to a second embodiment of the present invention. The second electronic device 200 embodiment of the present invention is identical to the first electronic device 100 embodiment of the present invention. A difference in electronic device 200 is a photo-taking unit 26, built in the embodiment of electronic device 200, for capturing images which can be show on the displace screen 25. The photo-taking unit 26 can be CCD (Charge Couple Device) or CMOS (Complementary Metal Oxide Semiconductor).

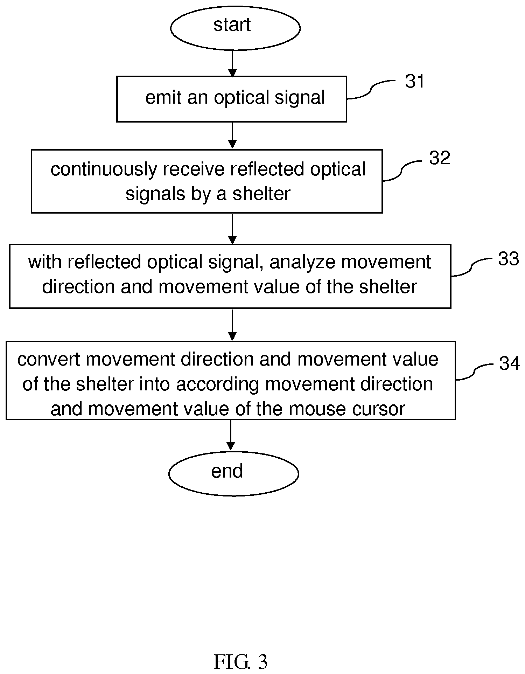

Referring to FIG. 3, FIG. 3 illustrates a flowchart of control method for the optical transceiver of the present invention. In the present invention, the control method of optical transceiver 22 includes:
Emit an optical signal (step 31)
Continuously receive reflected optical signals by a shelter (step 32)
With reflected optical signal, analyze movement direction and movement value of the shelter (step 33)
Convert movement direction and movement value of the shelter into according movement direction and movement value of the mouse cursor (step 33)

When the user makes a movement with a finger or other substitute (such as a stylus) on the optical transceiver, optical signals emitted from the optical transceiver will be sheltered and reflected. The optical transceiver continuously receives reflected optical signals, and recognizes movement direction and movement value of the finger to determine the movement direction and movement value of the mouse cursor on the display screen.

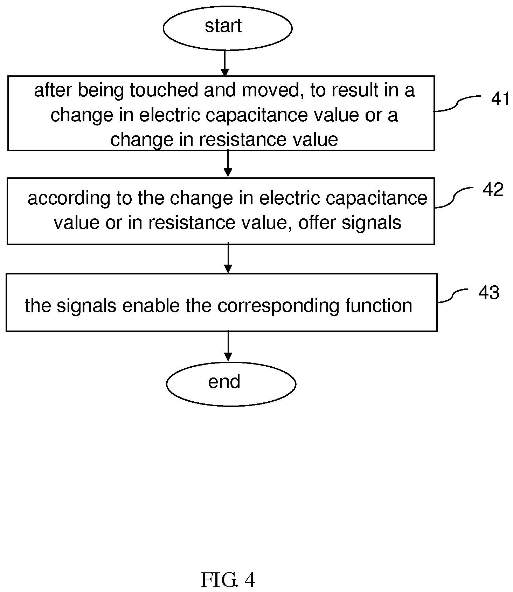

Referring to FIG. 4, FIG 4 illustrates a flowchart of control method for the first sensor of the present invention. In the present invention, the control method for the first sensor 23 includes:
After being touched and moved, to result in a change in electric capacitance value or a change in resistance value (step 41)
According to the change in electric capacitance value or in resistance value, offer signals (step 42)
The signals enable the corresponding function (step 43)

When a user touches with a finger and moves on the first sensor, a vertical movement value made by the user's finger on the first sensor can be detected via the change in electric capacitance value or resistance value. It replaces the scrolling design of a mouse rolling the scrolling bar on the edge of windows interface.

## Claims

1. An electronic device (100, 200), comprising:
a body (21);
a display screen (25), installed in said body (21), for displaying information; the display screen (25) is provided with touch-controlling function, and
at least a second sensor (24), attached to said body (21), for generating a signal, capable of enabling a corresponding function of said second sensor (24) after being touched;
**characterized in that** the electronic device further comprises:
an optical transceiver (22), attached to said body (21), for continually emitting an optical signal onto an object moving on the optical transceiver (22) and receiving the continuous reflection of said optical signal to determine a movement direction and a movement value of the object to determine the movement direction and the movement value of a cursor displayed on said display screen (25); and
a first sensor (23), attached to said body (21), for being touched and moved on said first sensor (23), capable of detecting a vertical movement value via change of capacitance value;
wherein:
the first sensor (23) achieves a function of mouse scrolling according to the vertical movement value detected, and
the display screen (25), the first sensor (23), the second sensor (24), and the optical transceiver (22) are located on the same side surface of said body (21).

2. The electronic device (100, 200) of claim 1 **characterized in** said optical transceiver (22) comprises an optical emitting unit and an optical receiving unit, said optical emitting unit for emitting said optical signal, said optical receiving unit for receiving the reflection of said optical signal.

3. The electronic device (100, 200) of claim 2 **characterized in** said optical emitting unit is a light-emitting diode or a laser diode.

4. The electronic device (100, 200) of claim 2 **characterized in** said optical receiving unit is a photodiode.

5. The electronic device (100, 200) of claim 1 **characterized in** said first sensor (23) is a bar shape.

6. The electronic device (100, 200) of claim 1 **characterized in** said second sensor (24) is a circle, a rectangle, a triangle, or a geometric figure.

7. The electronic device (100, 200) of claim 1 **characterized in** said movement direction and said movement value refers to the direction of the cursor movement and the distance of the cursor movement.

8. The electronic device (100, 200) of claim 1 **characterized by** further comprising a camera unit (26) for capturing images.

## Patentansprüche

1. Elektronische Vorrichtung (100, 200), die aufweist:
einen Körper (21);
einen Anzeigebildschirm (25), der in dem Körper (21) installiert ist, um Informationen anzuzeigen, wobei der Anzeigebildschirm (25) mit einer Berührungssteuerfunktion versehen ist, und
wenigstens einen zweiten Sensor (24), der an dem Körper (21) angebracht ist, um ein Signal zu erzeugen, der fähig ist eine entsprechende Funktion des zweiten Sensors (24) zu ermöglichen, nachdem er berührt wird;
**dadurch gekennzeichnet, dass** die elektronische Vorrichtung ferner aufweist:
einen optischen Transceiver (22), der an dem Körper (21) angebracht ist, um fortlaufend ein optisches Signal auf ein Objekt zu emittieren, das sich auf dem optischen Transceiver (22) bewegt, und Empfangen der fortlaufenden Reflexion des optischen Signals, um eine Bewegungsrichtung und einen Bewegungswert des Objekts zu bestimmen, um die Bewegungsrichtung und den Bewegungswert eines Eingabezeigers, der auf dem Anzeigebildschirm (25) angezeigt wird, zu bestimmen; und
einen ersten Sensor (23), der an dem Körper (21) angebracht ist, um auf dem ersten Sensor (23) berührt und bewegt zu werden, der fähig ist, einen vertikalen Bewegungswert über die Änderung des Kapazitätswerts zu erfassen;
wobei:
der erste Sensor (23) gemäß dem erfassten vertikalen Bewegungswert eine Funktion zum Mausblättern erreicht, und
der Anzeigebildschirm (25), der erste Sensor (23), der zweite Sensor (24) und der optische Transceiver (22) auf der gleichen Seitenoberfläche des Körpers (21) angeordnet sind.

2. Elektronische Vorrichtung (100, 200) nach Anspruch 1, **dadurch gekennzeichnet, dass** der optische Transceiver (22) eine optische Emissionseinheit und eine optische Empfangseinheit aufweist, wobei die optische Emissionseinheit zum Emittieren des optischen Signals dient, wobei die optische Empfangseinheit zum Empfangen der Reflexion des optischen Signals dient.

3. Elektronische Vorrichtung (100, 200) nach Anspruch 2, **dadurch gekennzeichnet, dass** die optische Emissionseinheit eine Leuchtdiode oder eine Laserdiode ist.

4. Elektronische Vorrichtung (100, 200) nach Anspruch 2, **dadurch gekennzeichnet, dass** die optische Empfangseinheit eine Fotodiode ist.

5. Elektronische Vorrichtung (100, 200) nach Anspruch 1, **dadurch gekennzeichnet, dass** der erste Sensor (23) eine Stabform hat.

6. Elektronische Vorrichtung (100, 200) nach Anspruch 1, **dadurch gekennzeichnet, dass** der zweite Sensor (24) ein Kreis, ein Rechteck, ein Dreieck oder eine geometrische Figur ist.

7. Elektronische Vorrichtung (100, 200) nach Anspruch 1, **dadurch gekennzeichnet, dass** die Bewegungsrichtung und der Bewegungswert sich auf die Richtung der Eingabezeigerbewegung und die Strecke der Eingabezeigerbewegung beziehen.

8. Elektronische Vorrichtung (100, 200) nach Anspruch 1, **dadurch gekennzeichnet, dass** sie ferner eine Kameraeinheit (26) zum Aufnehmen von Bildern aufweist.

## Revendications

1. Dispositif électronique (100, 200), comprenant :
un corps (21) ;
un écran d'affichage (25), installé dans ledit corps (21), pour afficher des informations ;
l'écran d'affichage (25) est doté d'une fonction de commande tactile, et
au moins un second capteur (24), fixé audit corps (21), pour générer un signal, apte à permettre une fonction correspondante dudit second capteur (24) après avoir été touché ;
**caractérisé en ce que** le dispositif électronique comprend en outre :
un émetteur-récepteur optique (22), fixé audit corps (21), pour émettre en continu un signal optique sur un objet se déplaçant sur l'émetteur-récepteur optique (22) et recevoir la réflexion continue dudit signal optique pour déterminer une direction de déplacement et une valeur de déplacement de l'objet afin de déterminer la direction de déplacement et la valeur de déplacement d'un curseur affiché sur ledit écran d'affichage (25) ; et
un premier capteur (23), fixé audit corps (21), destiné à être touché et déplacé sur ledit premier capteur (23), capable de détecter une valeur de déplacement vertical via un changement de valeur de capacité ;
dans lequel :
le premier capteur (23) accomplit une fonction de défilement de la souris en fonction de la valeur de déplacement vertical détectée, et
l'écran d'affichage (25), le premier capteur (23), le second capteur (24), et l'émetteur-récepteur optique (22) sont situés sur la même surface latérale dudit corps (21).

2. Dispositif électronique (100, 200) selon la revendication 1, **caractérisé en ce que** ledit émetteur-récepteur optique (22) comprend une unité optique émettrice et une unité optique réceptrice, ladite unité optique émettrice étant destinée à émettre ledit signal optique, ladite unité optique réceptrice étant destinée à recevoir la réflexion dudit signal optique.

3. Dispositif électronique (100, 200) selon la revendication 2, **caractérisé en ce que** ladite unité optique émettrice est une diode électroluminescente ou une diode laser.

4. Dispositif électronique (100, 200) selon la revendication 2, **caractérisé en ce que** ladite unité optique réceptrice est une photodiode.

5. Dispositif électronique (100, 200) selon la revendication 1, **caractérisé en ce que** ledit premier capteur (23) est en forme de barre.

6. Dispositif électronique (100, 200) selon la revendication 1, **caractérisé en ce que** ledit second capteur (24) est un cercle, un rectangle, un triangle ou une figure géométrique.

7. Dispositif électronique (100, 200) selon la revendication 1, **caractérisé en ce que** ladite direction de déplacement et ladite valeur de déplacement se réfèrent à la direction du déplacement de curseur et à la distance du déplacement de curseur.

8. Dispositif électronique (100, 200) selon la revendication 1, **caractérisé en ce qu'**il comprend en outre une unité caméra (26) destinée à capturer des images.
